Europäisches Patentamt

European Patent Office

Office européen des brevets

Publication number: **0 275 607**
A1

# EUROPEAN PATENT APPLICATION

(21) Application number: 87202614.1

(22) Date of filing: 23.12.87

(51) Int. Cl.4: **B02C 19/18** , B01D 9/00 , B01J 19/10

(30) Priority: 21.01.87 SE 8700213

(43) Date of publication of application:
27.07.88 Bulletin 88/30

(84) Designated Contracting States:
AT BE CH DE ES FR GB GR IT LI LU NL SE

(71) Applicant: **Nobel Kemi AB**
**Box 800**
**691 85 Karlskoga(SE)**

(72) Inventor: **Bellamy, Anthony**
**Sjögärdesvägen 2**
**S-691 44 Karlskoga(SE)**

(74) Representative: **Falk, Bengt**
**Nobel Corporate Services Patents and**
**Trademarks**
**S-691 84 Karlskoga(SE)**

(54) **A method for the production of crystalline substances.**

(57) The invention relates to a method for increasing the bulk density and/or improving the properties and handling characteristics of those crystalline substances which normally have a low bulk density, compare with the crystal density, and poor handling characteristics due to their irregular or needle-like crystal form. According to the invention such crystals are treated ultrasonically as a dispersion or suspension in a liquid phase. The original crystals are thereby broken down in a mild manner into fragments which have a more compact form.

Fig. 2

# A METHOD FOR THE PRODUCTION OF CRYSTALLINE SUBSTANCES

This invention relates to a general method for increasing the bulk density of those crystalline substances which normally have low bulk density due to their irregular or needle-shaped crystal form. Such crystalline substances not only exhibit low bulk density, but also generally possess poor handling characteristics because the crystals do not pack well together and easily become clogged in narrow feed-channels. It is well known that one can often increase the bulk density and improve the handling characteristics of such substances by a conventional milling operation, but such milling does not always give the desired result because the fracturing of the crystals is rather non-specific. In addition to breaking off protruding corners and tips from irregularly formed crystals, milling can also shatter compact and well-formed crystals into smaller pieces, thus reducing any change towards a higher bulk density.

We have now discovered however that irregular or needle-shaped crystals can be broken down (fractured) in a mild way by ultrasonic treatment. According to the discovery, the crystals are ultrasonically treated as a dispersion or suspension in a liquid phase, the liquid phase being either the mother liquor from which the crystals separated or some other inert solvent or liquid system. We have been able to show that a liquid phase with a high water-content or even pure water is ideal for this purpose. The ultrasonic treatment may also be performed either after crystallisation is complete or even during crystallisation.

Ultrasonic treatment implies treatment with sound having a frequency above that which is detectable by the human ear i.e. > 16000-20000Hz. According to the discovery, the ultrasonic treatment of the dispersion or suspension of the crystals can be performed as a batch process, either in an ultrasonic bath or in a vessel fitted with a submersible ultrasonic generator, or as a continuous flow process using either an ultrasonic bath as the generator or a flow-through ultrasonic cell.

The duration of the ultrasonic treatment, and the frequency and intensity of the radiation can be selected by those skilled in the art to achieve the desired end result. The process of the fracturing process can be followed by particle size analysis of samples periodically removed from the system.

In our studies of the ultrasonic fracturing process we have used an ultrasonic bath, type Sonorex RK106S supplied by Bandelin Electronic, West Germany, operating at 35kHz. The manufacturers suggest in their advertising literature that their ultrasonic baths may be used for disruption of biological cells, for producing different types of solutions, dispersions and emulsions, and for cleaning purposes. Nowhere have we found any suggestion that ultrasonic energy might be used in the manner described in the present work. The fact that ultrasonic treatment according to the invention does not produce the desired fracturing when the crystals are short and fat or plate-like, further emphasises the novelty of our invention.

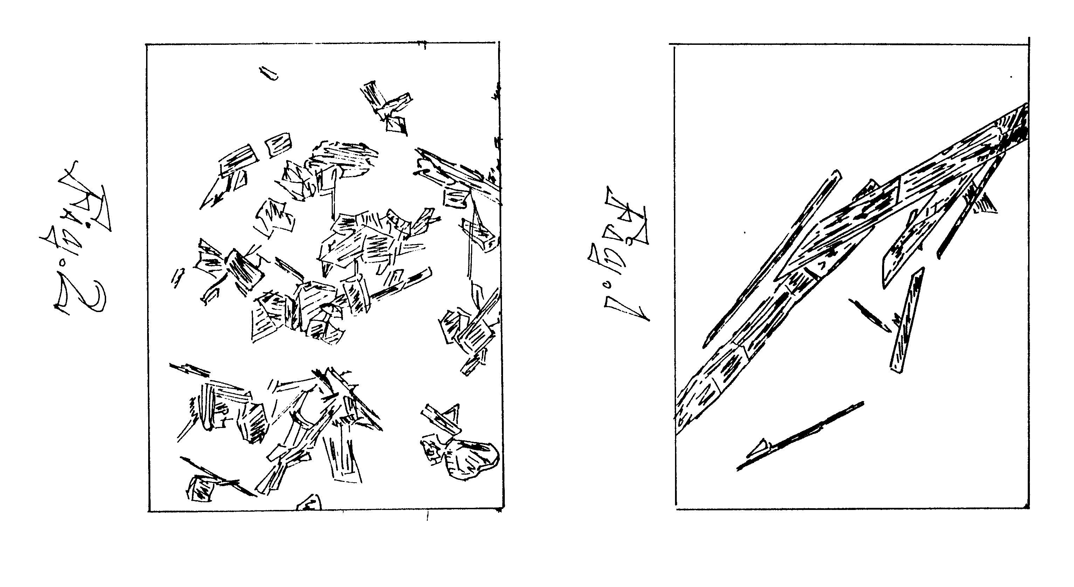

We have shown for example that impure 2,2',4,4',6,6'-hexanitrostilbene, commonly known as HNS I within the explosives industry, which normally has a bulk density of $0.35-0.40 gcm^{3}$ and consists of plate-shaped crystals, is affected relatively little and in an unpredictable manner by ultrasonic treatment, while similar treatment of the same compound in the form of needle-shaped crystals after purification and recrystallisation from a suitable solvent e.g. N-methylpyrrolidone, commonly known as HNS II, give a significant increase in the bulk density. For the latter case, fig 1 and 2 demonstrate how the original needle-shaped crystals (fig 1) are broken down to prismatic crystals (fig 2) with significantly reduced length to bredth ratio. Fig 1 shows an electron-microscope picture at 200 times magnification of recrystallised HNS, while fig 2 shows the same crystals at the same magnification after ultrasonic treatment according to the invention.

The method according to the invention has been defined in the following patent claims. and will now be further described by examples, of which examples 5 and 6 show that plate-shaped crystals cannot be advantageously affected by treatment according to the invention.

The bulk densities were measured according to DIN 53 194.

## Example 1

Hexanitrostilbene (300g), which had been recrystallised from N-methylpyrrolidone with addition of chlorobenzene during crystallisation in order to reduce the solubility, and which had bulk density $0.44 gcm^{3}$ and volume mean diameter (VMD) 193um, was suspended in 6% methanol in water (3500ml) and treated ultrasonically (Sonorex RK106S, 35kHz) with mechanical stirring during 1h. The solid was then filtered off and dried. The bulk density was $0.88 gcm^{3}$ and the VMD $30 \mu m$.

## Example 2

Hexanitrostilbene (304g) was dissolved in N-methylpyrrolidone (1750ml) at 125°. Chlorobenzene (1750ml) was then added with mechanical stirring during 50min whilst keeping the temperature at 125°. After cooling, the suspension was transfered to a beaker placed in an ultrasonic bath and the suspension was treated ultrasonically with mechanical stirring during 2h. The solid was then filtered off, was washed with methanol (2X) and 3% methanol in water (3$^\times$), and then dried. Yield: 264g (87%). The bulk density was 0.95gcm $^3$ and the VMD 44$\mu$m.

## Example 3

Hexanitrostilbene (9.0g) was dissolved in dimethylformamide (DMF, 150ml) at 100°C. The recrystallisation flask was transfered to an ultrasonic bath filled with boiling water. With moderate mechanical stirring of the solution, PhCl (150ml) was added during 35min. The temperature at the end of the addition was 65°C. The ultrasonic bath was operated throughout the addition and subsequent cooling to 20°C. The solid was filtered off, was washed with water and then dried. Yield: 8.1g (90%). The bulk density was 0.78gcm $^3$ and the VMD 31$\mu$m.

## Example 4

Benzoic acid (100g), which had been recrystallised from acetone and petroleum ether. and which had bulk density 0.46gcm $^3$ and VMD >35$\mu$m, was suspended in water saturated with benzoic acid (600ml) and treated ultrasonically, in the same apparatus as the above examples, for 1h. The solid was filtered off and dried. The final product had bulk density 0.76gcm $^3$ and VMD 147$\mu$m.

In a control experiment, in which the ultrasonic generator was left switched off, the resulting benzoic acid had the same bulk density and VMD as the starting material.

## Example 5

HNS I (110), which had bulk density 0.42gcm $^3$ and VMD 47$\mu$m, was suspended in 3% methanol in water (3000ml) and treated ultrasonically during 1.5h. The solid was filtered off and dried. Yield: 106g. The bulk density was 0.47gcm $^3$ and VMD 10$\mu$m.

## Example 6

HNS I was treated as in Example 5, but only for 5min. The product had bulk density 0.37gcm $^3$ and VMD 24$\mu$m.

The products from Examples 5 and 6 were difficult to filter off and caused severe electrostatic problems when dry.

## Claims

1. A method for increasing the bulk density of those crystalline substances which have a low bulk density, compared to the crystal density, due to the crystals being irregular and needle-like, comprising ultrasonic treatment of a liquid dispersion or suspension of the crystals in order to break down the original crystals into fragments having a more compact form.

2. A method according to claim 1 in which the ultrasonic treatment is performed after crystallisation is complete.

3. A method according to claim 1 in which the ultrasonic treatment is performed during the crystallisation process.

4. A method according to one or more of claims 1-3 in which the ultrasonic treatment is performed with the crystals still dispersed in the mother liquor from which they have crystallised.

5. A method according to one or more of claims 1 and 2 in which the ultrasonic treatment is performed while the crystals are dispersed or suspended in a chemically inert liquid.

6. A method according to claim 5 in which the ultrasonic treatment is performed while the crystals are dispersed or suspended in an inert liquid system which consists partially or completely of water.

7. A method according to one or more of claims 1-6 in which the ultrasonic treatment is performed either in an ultrasonic bath or in a vessel fitted with a submersible ultrasonic generator, containing a dispersion or suspension of the crystalline substance.

8. A method according to one or more of claims 1-6 in which the ultrasonic treatment is performed in a flow-through ultrasonic cell, through which a dispersion or suspension of the crystalline substance is pumped.

9. A method according to one or more of the above claims in which the ultrasonic treatment is performed in order to improve the properties and handling characteristics of the crystalline substance.

Fig.1

Fig.2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | RESEARCH DISCLOSURE, no. 187, November 1979, page 618, abstract no. 18739, Havant Hants, GB; "Ultrasonic grinding of powders" <br> * Whole abstract * | 1,5-9 | B 02 C 19/18 <br> B 01 D 9/00 <br> B 01 J 19/10 |
| Y | IDEM <br> --- | 2-4 | |
| Y | FR-A-1 564 995 (MERCK & CO., INC.) <br> * Figure 8; page 1 * | 2-4 | |
| A | | 8,9 | |
| A | GB-A- 864 178 (BURGESS) <br> * Whole document * <br> --- | 1,5,8,9 | |
| A | JOURNAL OF PHARMACEUTICAL SCIENCES, vol. 56, no. 11, November 1967, pages 1373-1385, Washington D.C., US; D.M. SKAUEN: "Some pharmaceutical applications of ultrasonics" <br> * Pages 1377-1379 * <br> --- | 1-4,9 | |
| A | US-A-3 544 076 (ZENKOVICH) <br> * Column 1, lines 27-38; figures * <br> --- | 1,7,9 | TECHNICAL FIELDS SEARCHED (Int. Cl.4) <br><br> B 02 C <br> B 01 D <br> B 01 J |
| A | FR-A-1 387 967 (LICENCIA) <br> * Page 2, left-hand column, last paragraph; right-hand column, paragraph 1 * <br> --- | 1,3,4,7,9 | |
| A | FR-A-1 207 479 (WILLEMS) <br> * Page 10; example 3 * <br> --- | 1,3,4,8,9 | |
| A | GB-A-1 268 242 (RUZICKA) <br> * Page 1, lines 51-63; page 4, lines 20-100 * <br> ----- | 1,5,8,9 | |

The present search report has been drawn up for all claims

| Place of search | Date of completion of the search | Examiner |
|---|---|---|
| THE HAGUE | 27-04-1988 | CZECH B.P. |